# NEW EUROPEAN PATENT SPECIFICATION

(11) **EP 0 443 830 B2**
(45) Date of publication and mention of the opposition decision: **02.09.1998**
(45) Mention of the grant of the patent: 23.11.1994
(21) Application number: 91301336.3
(22) Date of filing: 20.02.1991
(51) Int. Cl.: B62D 11/18, E02F 9/14, E02F 3/34

(54) **Loader vehicle**
Laderfahrzeug
Véhicule chargeur

(30) Priority: 21.02.1990 GB 9003852; 21.02.1990 GB 9003853; 21.02.1990 GB 9003854; 21.02.1990 GB 9003920
(43) Date of publication of application: 28.08.1991
(73) Proprietor: J.C. BAMFORD EXCAVATORS LIMITED, Uttoxeter Staffordshire ST14 5JP (GB)
(72) Inventor: Bamford, Joseph Cyril, CH-1820 Territet, Montreux (CH)
(74) Representative: Leach, John Nigel

(56) References cited:
- EP-A- 0 258 819
- BE-A- 886 945
- CH-A- 390 792
- DE-A- 3 522 723
- DE-U- 6 610 675
- US-A- 4 055 262
- US-A- 4 117 902
- US-A- 4 260 320
- US-A- 4 397 371
- US-A- 4 568 095
- US-A- 4 705 449
- Firm pamphlet issued by the firm Kramer "Kramer Allrad 314 Turbo", 1998.

## Description

This invention relates to a loader vehicle, hereinafter referred to as "of the kind specified" comprising, a body having a front end and a rear end and provided with ground engageable propulsion means, an operator's compartment provided at a fixed location on the body and a boom assembly which is pivotally mounted, at an inner end thereof, on the body, adjacent the rear end thereof, for movement between a raised position and a lowered position in which the boom assembly extends forwards alongside the operator's compartment and a material handling implement carried on an outer end of the boom assembly is disposed forward of the front end of the body.

Such a vehicle is disclosed in DE-A-3,522,723, but the vehicle has a boom assembly comprising a pair of spaced parallel arms which extend one on one side and one on the opposite side of the operator's compartment. As a result access to the operator's compartment can be gained only from the front by clambering over the material handling implement.

DE-A-3 546 078 discloses another such vehicle wherein a single lift arm assembly extends forwardly along one side only of an operator's compartment. Whilst access can be gained to the operator's compartment from the side opposite to that having the single lift arm assembly such access is provided in a vehicle which has limited strength.

An object of the invention is to provide a loader vehicle of the kind specified whereby these disadvantages are overcome.

According to the invention this aim is achieved by providing a loader vehicle as specified in Claim 1.

An access opening to the operator's compartment can conveniently be provided on the other side of the operator's compartment to that alongside which the lift arm assembly extends.

If desired the pivotal mounting means may comprise a pair of discrete mounting means or may comprise a single transversely extending elongate mounting means.

The lift arm assembly may comprise a single member or a plurality of members which extend(s) forwards along said one side only of the operator's compartment.

The lift arm assembly may have an implement carrying member which projects from the outer end of the lift arm assembly and extends transversely of the body and has said material handling implement carried thereon.

The body may be provided with an abutment means to support the implement carrying member against displacement in a direction rearwardly of the vehicle when the boom assembly is in a lower position.

The abutment means may be adapted to engage a part of or carried by the implement carrying member.

Preferably said abutment means is adapted to engage a roller rotatably mounted on the implement carrying member.

The abutment means may comprise an abutment surface provided at the front end of the side member disposed on the opposite side of the vehicle to the side on which the lifting arm assembly is disposed.

Said abutment surface may have a lower, generally upright part and an upper part which extends forwardly and upwardly.

The lift arm assembly may comprise a major rectilinearly extending part which extends from the inner end towards the outer end and a minor part which is inclined downwards relative to the major part and is disposed between the major part and said implement carrying member.

Said major and minor parts may be inter-connected by an intermediate part disposed therebetween and extending transversely inwardly from said major part to said minor part.

The lift arm assembly, including the pivot member and the implement carrying member may comprise a unitary component.

The unitary component may comprise a tubular member which may be of circular cross-section.

The unitary member may be made by bending from a single length of material.

The body may comprise a pair of transversely spaced side members on which said ground engageable propulsion means are mounted.

The ground engageable propulsion means may comprise wheels or tracks.

The ground engageable propulsion means may comprise a front wheel assembly disposed forwardly of a rear wheel assembly, at least one of said wheel assemblies may comprises a pair of wheels spaced apart transversely of the vehicle and at least one of said wheel assemblies being turnable about a steering axis to permit the vehicle to be steered.

Alternatively, the ground engageable transporter means may comprise a pair of wheel assemblies disposed on opposite sides of the vehicle and each pair comprising a front wheel disposed forwardly of a rear wheel and means to permit the vehicle to be propelled and steered by driving the wheels on one side of the vehicle at the same or a different speed and/or in a different direction of rotation from those on the other side of the vehicle.

Alternatively, the ground engageable transporter means may comprise a pair of endless tracks disposed one on one side and one on the other side of the vehicle and means to permit the vehicle to be propelled and steered by driving the track on one side of the vehicle at the same or a different speed and/or a different direction from the track on the other side of the vehicle.

A portion of the operator's compartment may be disposed between said side members.

The body may have a transmission compartment at least a portion of which is disposed between said side members and below the operator's cab and said transmission compartment housing a transmission to transmit drive from an engine of the vehicle to the ground engageable propulsion means.

The body may be provided with an engine compartment rearwardly of the operator's compartment and transmission compartment and said engine compartment housing the engine of the vehicle.

The mounting means may be supported by a pair of transversely spaced upright members disposed adjacent the rear of the body and which extend upwardly from said side members at the rear of the operator's compartment.

The mounting means may be disposed on or adjacent a top rear part of the operator's compartment at a level whereby an operator can see horizontally rearwardly beneath the pivot member.

A part of said upright members may provide a part of the side walls of the operator's cab.

The side members may comprise loop case compartments comprising a transversely inner wall and a tranversely outer wall joined by top and bottom walls and end walls and a member providing one of said walls, preferably the outer wall, may be provided integrally with the member which provides at least part of one plate, and preferably an inner plate, of each upstanding member.

A part of the side members and of the upright members may be formed integrally with each other and the top wall of the operator's compartment may also be integrated therewith.

The operator's compartment may comprise an enclosure having one side wall, a top wall and a rear wall and another side wall having an access opening and a front wall through which an operator may see, at least part of said walls being integral with other structural elements of the vehicle.

The boom assembly may comprise an implement levelling linkage to maintain the material handling implement in a fixed orientation relative to the body irrespective of raising and lowering of the lift arm assembly.

A pair of ground engageable propulsion means may be disposed on opposite sides of the vehicle whereby the vehicle can be propelled and steered by driving the propulsion means on one side of the vehicle at the same or different speed and/or direction from that on the other side and having a manually operable propulsion control means to control the direction in which, and the speed at which, the vehicle is propelled by the propulsion means and said propulsion control means is arranged and disposed so as to be operable by one hand of an operator.

Where the vehicle is a loader vehicle the vehicle may be provided with a loader control means to control raising and lowering of the boom assembly and movement of the material handling implement relative to the boom assembly, the loader control means being arranged and disposed so as to be operable by the other hand of the operator.

The propulsion control member may be operatively connected to said input members by a mechanical linkage.

Alternatively the propulsion control member may be operatively connected to said input members by a fluid pressure linkage.

Where the linkage is a fluid pressure linkage the input members may be provided with input levers which are connected to double acting fluid operated rams to which fluid is fed under the control of said loader control member.

Each fluid operated ram may be pivotally mounted to the body at a single location for pivotal movement about an axis parallel to the axis of rotation of the associated input member.

With the fluid pressure operated linkage the propulsion control member may comprise a universally mounted lever having a part spherical valve operating surface normal to the operating lever and there being four valve operating members engageable with said surface.

The valve operating members may be disposed at 45° to the drive direction of the vehicle and the propulsion control means may be provided with resilient biasing means so as normally to seek a median position with respect to a direction transverse to the fore and aft axis of the vehicle. Consequently, an operator feels less resistance to movement of the control member in a direction parallel to the fore and aft direction of the vehicle which, in use, provides forward or reverse drive, whilst any lateral component of movement of the propulsion control member encounters a stronger bias, therefore making the vehicle easier and safer to drive.

The basing means may comprise a pair of resiliently biased plungers adapted to engage the operating surface on opposite sides of a central axis thereof and disposed on a line transverse to the fore and aft direction of the vehicle.

The valve operating members may themselves be resiliently biased into engagement with the operating surface and in this case the plungers have a stronger resilient bias than is provided to the valve operating members.

The above described hydraulic control enables operation of the input members from any desired location in the operator's compartment without the need to provide a route for a mechanical linkage and the above described single pivot of the two operating rams enables the hydraulic linkage to be simply and conveniently provided.

The invention is particularly concerned with a vehicle where the input members are the swash plate angle control members of hydrostatic pumps, the outputs of which are fed to hydrostatic motors which drive the ground engageable propulsion means.

At least one of said input members may be adapted to be engaged at a first position on one side of their axes of rotation and at a second position on the opposite side of their axis of rotation but facing in the same direction by a centring lever which is mounted on the body adjacent one end and urged in the direction towards the axis of pivot of the associated input lever so that said centring lever engages said input member at said positions when the input member is in a neutral position.

Preferably such a centring lever is provided for both input members and the centring levers are disposed so as to be urged in the direction towards the associated axis of pivot of the associated input member, for example, either by positioning the centring levers on the side of their respective input member which is remote from the other input member and inter-connecting the centring levers by resilient biasing means to pivot them in opposite directions to urge them towards their associated input member axes, or by positioning the centring levers on the side of their associated input member which is adjacent the other input member and resiliently basing said centring levers apart.

Such an arrangement ensures that the input members are automatically centred and is applicable for any of the linkages described hereinbefore, i.e. the direct mechanical linkage or mechanical linkage with integral servo mechanism or fluid pressure linkage. It will be appreciated that the centring levers apply a centring or return pressure to the input members at all times when they are displaced from their neutral position. This ensures that the input members are returned to their neutral position in which the ground engageable propulsion means maintain the vehicle stationary when no input is provided to the propulsion control means. Accordingly, any risk of the vehicle moving when, for example, the engine is started without an operator in the operator's compartment is avoided.

From a second more specific aspect of the invention:

A restraint member may be mounted on the body for movement between an operative position in which the restraint member extends transversely of the operator's compartment in restraining relationship with the seat and an inoperative position in which passage of an operator into and out of the seat is permitted.

The restraint member may be carried on at least one lever which is pivotally mounted on the body.

The operator's compartment may be obstructed from access at one side thereof and is provided with an access opening at the other side thereof and a control means for a first function of the vehicle is mounted at said other side of the operator's compartment for movement between an operative position wherein it is presented for manual engagement by an operator sitting in said seat and an inoperative position spaced from said operative position to permit an operator to pass through said access opening.

A control means for a second function of the vehicle may be provided at said one side of the operator's compartment.

Said control means for the second function may be mounted on a fixed part of the body or may be mounted for movement between an operative position where it is presented for manual engagement by an operator sitting in said seat and an inoperative position spaced from said operative position.

The or each control means may be mounted for movement on a respective lever the or each of which is pivotally mounted on the body about an axis which extends transverse to the body for movement between a generally upright position when the respective control member is in said operative position and a generally forward position in which said respective control member is in said inoperative position.

The pivoted lever or levers of the invention may be arranged to operate means to apply a parking brake when in said inoperative position, for example, by a Bowden cable or rigid linkage and may as well or alternatively be provided with an interlock to the engine of the vehicle to prevent the engine to be started and run.

An interlock sensitive to the presence of an operator on the seat may be provided so that the engine can only be started when an operator is sitting in the seat.

One of said first and second functions may comprise a propulsion control means to control the direction in which, and the speed at which, the vehicle is propelled, whilst the other function may comprise a loader control means to control raising and lowering of the boom assembly for movement of the material handling implement relative to the boom assembly.

Preferably the loader control means comprises said control means for the first function of the vehicle and the propulsion control means comprises the control means for the second function of the vehicle.

Ground engageable propulsion wheels may be disposed on opposite sides of the body, each propulsion wheel being carried on an outer end of a stub axle which is housed, so as to be rotatable about an axis of rotation, in a stub axle housing member mounted on the body. An inner end of each stub axle may have a driven wheel thereon which is driven by a flexible loop from a driving wheel driven by a motor or the inner end of each stub axle may be driven by other means such as a separate motor for each stub axle.

Each stub axle housing member may be provided with a carrier member which is mountable on the body in a selected one of a plurality of angular positions about a reference axis, the stub axle housing member being positioned relative to the carrier member so that said axis of rotation is disposed eccentrically relative to said reference axis.

Preferably, the carrier member and the body are provided with co-operating guide means which guide the carrier member for rotation about said reference axis.

By virtue of said eccentric disposition of the axis of rotation, the distance between the driven wheel and the driving wheel may be adjusted thereby permitting adjustment of the wheel base, the ground clearance and the height of the centre of gravity of the machine; where the stub axles are driven by a flexible loop, a flexible loop of appropriate length is provided. In addition, a flexible loop of a given length may be tensioned.

The body may be provided with an engine, two pairs of ground engageable propulsion wheels disposed on opposite sides of the body, a hydraulic drive means including first and second variable displacement pumps driven by the engine and operatively connected to first and second hydraulic motors disposed on opposite sides of the body, each pump being drivably connected to two ground engageable propulsion wheels of an associated one of said pairs of wheels on the associated side of the body by first and second endless loops each of which is engaged with a driving wheel driven by the pump and with a driven wheel connected to an associated one of the ground engageable wheels of said pair and propulsion control means whereby the hydraulic drive means can drive the pair of wheels on one side of the vehicle at the same or a different speed and/direction from the pair of wheels on the other side of the vehicle to propel and steer the vehicle.

The body may be provided with a longitudinally extending loop case compartment on each side of the vehicle, each loop case compartment having a transversely inner wall and a transversely outer wall joined by top and bottom walls and end walls, said stub axle housing member or members being mounted on the outer wall with said driven wheel or wheels disposed within said compartment.

Preferably, two stub axle housing members are provided on each side of the vehicle and each of said housing members are mounted on said outer wall with said driven wheels disposed within the compartment with said driving wheels disposed within the compartment therebetween with said loops engaged with respective driving and driven wheels.

The outer wall may be provided with a circular opening for the or each housing member to provide one of said co-operating guide means.

Ground engageable propulsion wheels may be disposed on opposite sides of the body, each propulsion wheel being driven by a flexible loop from a driving wheel driven by a motor.

The driving wheel or wheels may be carried on an output shaft of a motor and are unsupported by means independent of the motor.

The body may be provided with a longitudinally extending loop case compartment on each side of the vehicle, each loop case compartment having a transversely inner wall and a transversely outer wall joined by top and bottom walls and end walls.

Each motor may be mounted on the inner or the outer wall of an associated loop case compartment with the driving wheel or wheels disposed within the associated loop case compartment.

The driving wheel or wheels are preferably carried on an output shaft of the associated motor and are unsupported by the other wall of the associated compartment.

The output shaft of each motor may be supported at an outer part thereof by an outer bearing carried by a bracket fastened to the respective motor body.

The bracket may be provided with openings to permit of passage of said loop or loops.

The driving wheel or wheels may be provided on a sleeve member which receives the output shaft of the associated motor therein at one end, an inner bearing being provided between the sleeve and the body of the motor.

Preferably, the outer bearing is provided between the bracket and said sleeve.

A brake member may be carried by the output shaft outwardly of said sleeve.

The outer wall of each loop case compartment may be provided with an opening in way of the motor and driving wheel or wheels to permit of manipulation of a loop into driving relationship with a driving wheel and driven wheel.

The brake member may be disposed outwardly of the part of the outer wall of the loop case compartment at locations spaced from said motor and a removable extension housing may be provided to enclose the brake member.

The or each endless loop may comprise a chain such as a roller chain and the driving and driven wheels may comprise sprockets for engagement with the chain.

Alternatively, the or each endless loop may comprise a toothed or untoothed belt and the driving and driven wheels appropriate pulleys.

The body may have a transmission compartment at least part of which is defined by and disposed between said side members and disposed below the operator's compartment and said transmission compartment may have a transmission to transmit drive from an engine of the vehicle to the ground engageable transporter means.

The body may be provided with an engine compartment, disposed rearwardly of the operator's cab and the transmission compartment, housing the engine of the vehicle.

The mounting means for said lift arm assembly may be supplied by a pair of transversely spaced upright members disposed adjacent the rear of the body and which extend upwardly from said side members at the rear of the operator's cab.

By virtue of providing the boom assembly as described hereinbefore, convenient access to the operator's compartment is provided from one side of the vehicle thereby avoiding the need of an operator to clamber over a material handling implement to gain access to the operator's compartment at the front.

By virtue of providing a transversely extending pivot member which is pivotally mounted to the body at transversely spaced positions relatively low bearing loads are provided. Half the number of fluid operated rams are required than would be required if the boom assembly comprised a pair of spaced parallel arms disposed on opposite sides of the operator's compartment and the loader arm is relatively simple to manufacture. Because the axis of pivot is disposed adjacent the rear of the vehicle and adjacent to the top of the operator's compartment a relatively large arc of movement of the material handling implement is achieved, thus providing a relatively large range of lift, whilst providing the vehicle with good reach and good stability.

An embodiment of the invention will now be described by way of example with reference to the accompanying drawings wherein:
FIGURE 1 is a perspective view of a skid steer loader vehicle embodying the invention,
FIGURE 1a is an enlarged fragmentary view of part of Figure 1 to an enlarged scale,
FIGURE 2 is a side elevation of the vehicle of Figure 1 and showing the opposite side thereof to that shown in Figure 1,
FIGURE 3 is a section on the line 3-3 of Figure 2,
FIGURE 4 is a section on the line 4-4 of Figure 2,
FIGURE 5 is a front elevation of the vehicle of Figure 1 with part omitted for clarity,
FIGURE 6 is a fragmentary transverse cross-section, to an enlarged scale, to the vehicle of Figure 1 showing a stub axle housing assembly,
FIGURE 7 is a fragmentary transverse cross-sectional view, to an enlarge scale, to the vehicle of Figure 1 showing a motor assembly,

### General Layout

Referring now to the drawings, a skid steer loader vehicle 10 comprises a body 11 having a front end 12 and a rear end 13. The body 11 is provided with ground engageable propulsion means 14 comprising a pair of front wheels 15 disposed forwardly of a pair of rear wheels 16. The vehicle 10 is propelled in a straight line forwardly or rearwardly by driving all four wheels or, to steer the vehicle, by driving the wheels 15 and 16 on one side at a different speed and/or direction than those on the other side. Such skid steer loaders have a high degree of manoeuvrability and to facilitate skid steering and in particular, for example, the ability of the vehicle to turn about a central axis of the ground engageable propulsion means the wheel base is made, in the present example, slightly shorter than the track of the vehicle although, if desired, the wheel base may be the same or longer than the track if desired.

The wheels 15, 16 are carried on stub axles 17 which project outwardly from a pair of transversely spaced side members 18, 19 of the body 10 and which extend fore and aft of the vehicle. Between the side members 18, 19 is a transmission compartment 20 which houses a transmission 21, hereinafter to be described in more detail, whilst above and forwardly of the transmission compartment 20 is an operator's compartment 22 in which is provided an operator's seat 23, manually operable propulsion controls 24 for controlling the speed, selecting forward and reverse movement, and steering the vehicle and manually operable loader controls 25 for controlling a loader arm and material handling implement as hereinafter to be described.

The operator's compartment 22 is also defined by a pair of upstanding members 26, 27 which extend upwardly from the side members, 18, 19 on opposite sides of the vehicle and by a roof 28 which extends forwardly and adjacent its forward end is supported by posts 29.

A wire mesh screen 30 is provided on one side 31, of the operator's compartment 22 for protection of an operator, whilst the other side, 32 of the operator's compartment is unobstructed and provides an access opening 33 whereby an operator can enter and leave the operator's compartment 22.

Behind the transmission compartment 20 and operator's compartment 22 is provided an engine compartment 34 in which an engine 35 of any suitable type is housed. In the present example the engine is an air-cooled diesel engine but any other suitable engine may be provided.

### Loader Boom Assembly

The vehicle is provided with a loader arm boom assembly 40 which is disposed adjacent the one side 31 of the operator's compartment 22. The loader arm assembly 40 comprises a lift arm assembly 41 which has a pivot member 42 projecting from an inner end 43 of the lift arm assembly 41 and extends transversely of the body and is pivotally mounted on the body by pivotal mounting means 44, 45 provided on the upstanding members 26, 27 respectively. The lifting arm assembly 41 has an implement carrying member 46 which projects from an outer end 47 of the lifting arm assembly and extends transversely across the front end of the body and has a material handling implement 48 carried thereby so as to be disposed forward of the front end 12 of the body 11. In the present example the implement 48 is an earth moving bucket 49 although if desired other material handling implements may be provided, such as forks.

The pivotal mounting means comprise a pivot boss 44a welded in an aperture provided in an inner plate 27a of the upstanding member 27 and a pivot pin 45 is fixed therein. At its other end the pivot pin 45 is fixed in a further pivot boss 44b which is welded in an aperture in an inner plate 26a of the upright 26 and a downwardly inclined part 28a of the roof plate 28.

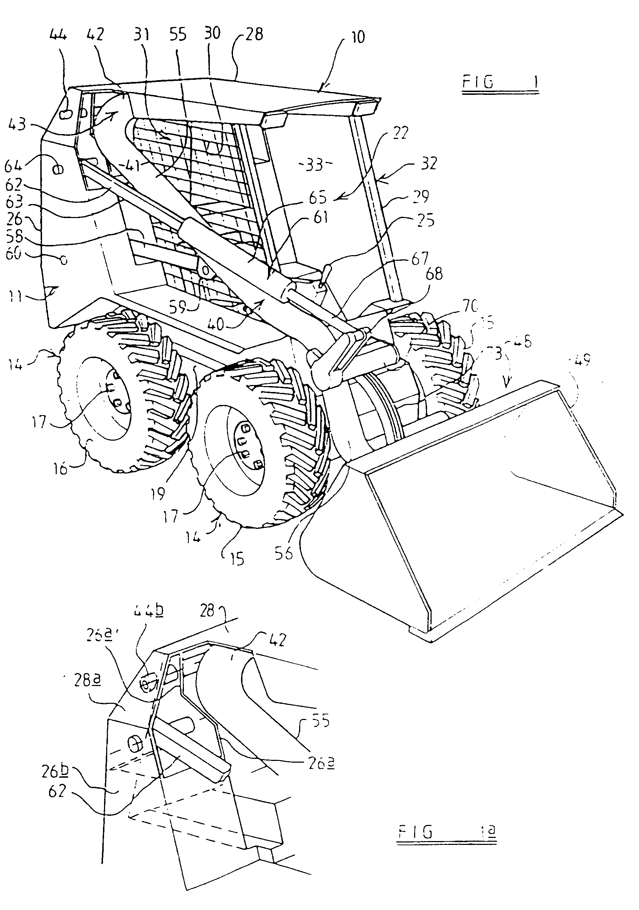

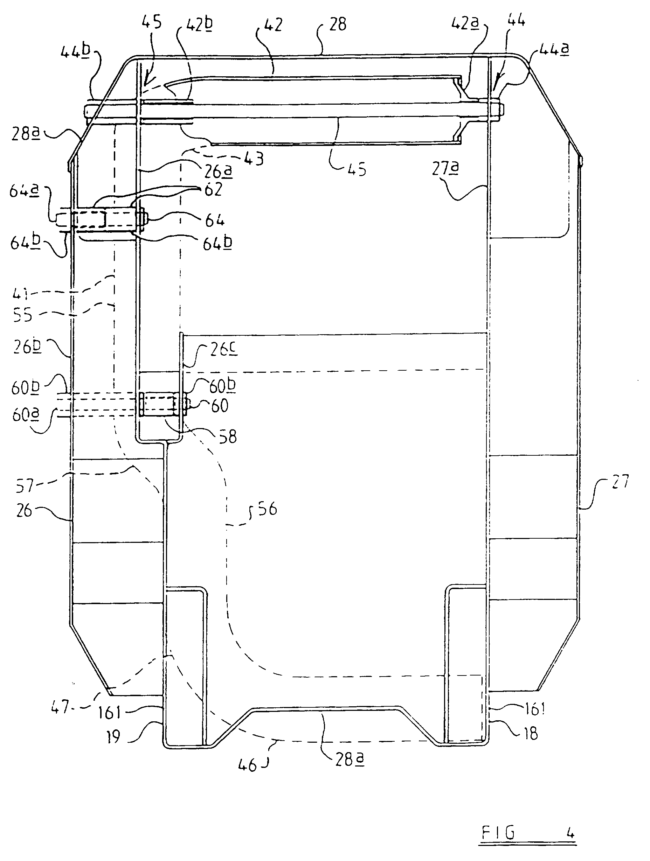

At its free end the pivot member 42 has a bearing housing 42a welded therein and the housing 42a carries a bush to rotatably mount the pivot member 42 on the pivot pin 45. At its other end the pivot member 42 has a further bearing housing 42b in the form of a bush welded in an opening formed in the pivot member 42 where it merges into a major part 55 of the lift arm assembly 41 and the bearing housing 42b again houses a suitable bearing bush to pivotally mount the pivot member 42 on the pivot pin 45. The inner plate 26a is cut away in this region, as shown at 26a' in Figure 1a, to accommodate the boom assembly.

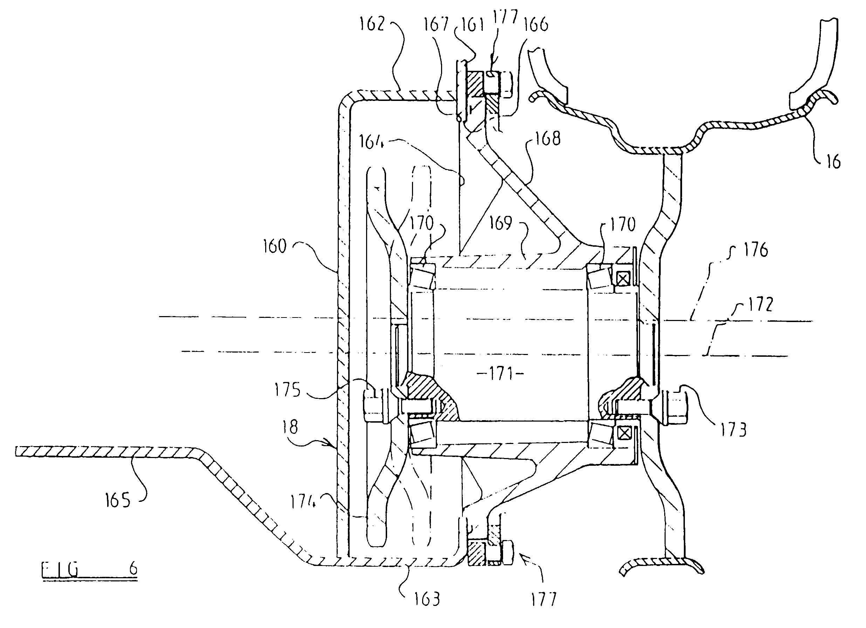

The lift arm assembly 41, pivot member 42 and implement carrying member 46 are formed as a unitary member by bending a steel tube to the desired shape. It will be seen that the lift arm assembly 41 comprises a major part 55 which extends generally rectilinearly from the inner end 43 towards the outer end 47 and a minor part 56 which extends generally downwardly and forwardly relative to the main part 55 and is disposed between the main part 55 and the implement carrying member 46. As best shown in Figures 4 and 5 an intermediate part 57 is provided between the main and minor parts 55, 56 which is inclined forwardly and transversely inwardly so as to position the minor part 56 within the front wheels 15 and in front of the operator's compartment 22.

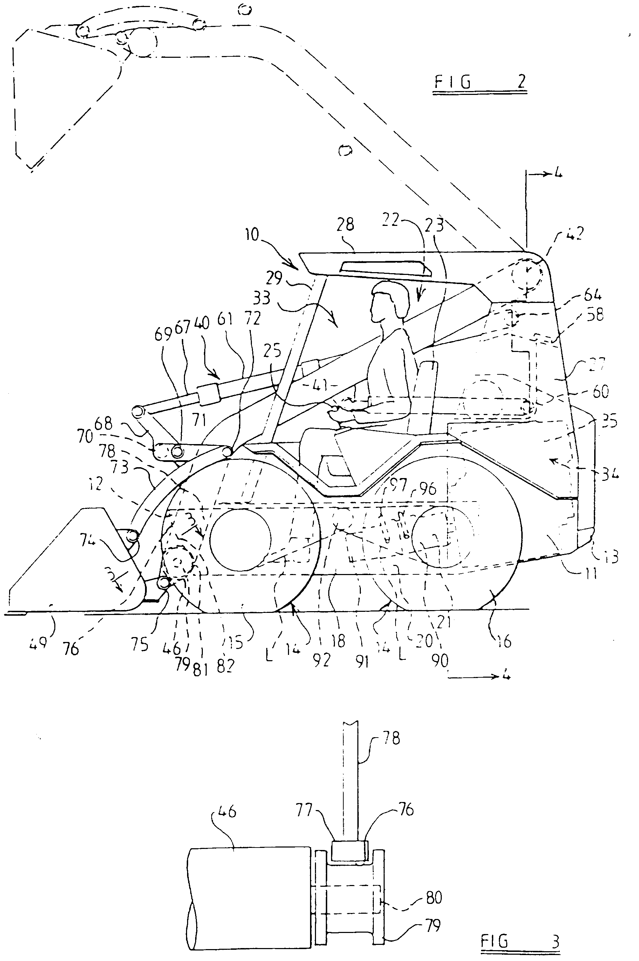

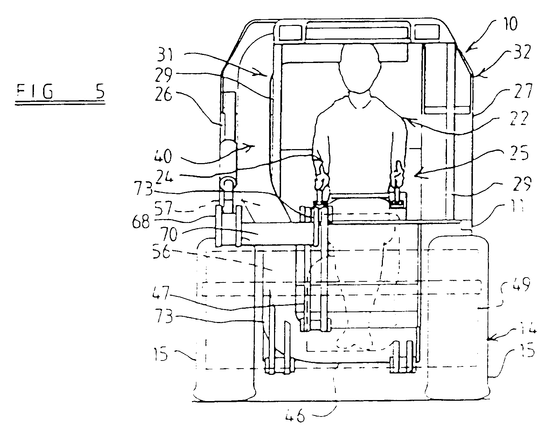

A hydraulic lift ram 58 is pivotally connected between a bracket 59 welded to the lift arm assembly 41 and the upstanding member 26 about an axis indicated at 60. The pivotal connection of the lift ram 58 to the upright 26 at the axis 60 comprises a pivot pin 60a which is fixed in pivot bushes 60b welded in openings provided in the inner plate 26a, and an outer plate 26b and a further plate 26c of the upstanding member 26. The cylinder of the ram 58 is pivotally mounted on the pivot pin 60a. The lift ram 58 when actuated is adapted to raise and lower the lift arm assembly 41 between a lower position shown in Figures 1 to 4 in full line and a raised position shown in chain dotted line in Figure 2.

An implement levelling link is indicated generally at 61 and comprises a first link 62 which comprises a bar 63 pivotally connected to the upstanding member 26 about an axis 64 and connected to a ram 65 from a cylinder 66 of which a piston rod 67 projects forwardly and is pivotally connected to one end of a first lever 68. The pivotal connection of the first link 61 comprises a pivot pin 64a fixed in pivot bushes 64b welded in apertures in the inner and outer members 26a, 26b respectively whilst the bar 63 is pivotally mounted on the pivot pin 64a.

The first lever 68 is pivotally mounted on the lift arm assembly 41 by a pivot member 69 carried by a bracket 69a mounted on the lift arm assembly 41 and is connected by a torque tube 70 to a second lever 71 which is pivotally connected at its outer end 72 to a second, fixed length link 73 which is pivotally connected to the bucket 49 as shown at 74.

The respective positions of the axis of pivot of the lift arm assembly 41 provided by the pivot pin 45 and the connection of the implement levelling link to the upstanding member 26 at axis 64 together with the length of the first and second levers 68, 71 and the position of pivotal connection of the second link 73 to the bucket 49 at 74 together with the position of pivotal connection of the bucket 49 to the implement carrying member 46 at 75 is arranged so as to provide a linkage which ensures that the orientation of the bucket 49 relative to the body is preserved irrespective of the angular position of the lift arm assembly 41 so long as relative movement does not occur between the piston rod 67 and cylinder 66.

When it is desired to pivot the bucket upwardly, i.e. cause it to rotate about the axis 75 in a clockwise direction as viewed in Figure 2, fluid is supplied to the cylinder 65 to act on the larger diameter side of the piston therein so as to force the piston rod 67 out of the cylinder 65 so that the above described linkage causes the desired clockwise movement of the bucket 49. Such movement is generally required in operation to lift or tear out earth and hence is known as "tear out" movement. Because the fluid is operative upon the whole cross-sectional area of the piston a relatively high power action is provided in this direction.

When it is desired to rotate the bucket in an anti-clockwise direction as shown in Figure 2, commonly known as "dumping" then fluid is supplied to act on an annular surface of the piston surrounding the piston rod 67 so that a smaller cross-sectional area is acted upon and therefore a faster, although less powerful action, is provided.

At the front end 12 of the side member 18 there is provided an abutment surface 76 provided by a bar 77 welded to a cam plate extension 78 of the side member 18. The bar 77 is adapted to abut a flanged roller 79 rotatably mounted on a spigot 80 projecting from the free end of the implement carrying member 46. The abutment surface 76 comprises a lower, generally vertical surface part 81 and a forwardly and upwardly inclined part 82, the surface parts 81 and 82 being contoured to cooperate with the roller 79 as the lift arm assembly 41 approaches its lowermost position and to prevent rearward displacement of the free end of the implement carrying member 46 when in such a lower position, for example, when driving a vehicle forwardly to load the bucket 49. If desired the abutment surface 76 may be extended upwardly so as to support the member 46 over a greater height.

From the foregoing it will be seen that boom assembly 40 extends forwardly from a position adjacent the rear end of the body 11 alongside the one side 31 of the operator's compartment 22 whilst the other side 32 is unobstructed so that an operator can gain accesss to the compartment through the access opening 33.

By providing the axis of pivot of the lift arm assembly 41 adjacent the top rear corner of the operator's compartment the operator is provided with the ability to lift the bucket to a relatively great height and at the same time provide the bucket with good reach and the vehicle with a stability. For example, the axis of pivot of the lift arm assembly is approximately 1.5m above the ground in the example illustrated, whilst the distance between the axis of pivot of the lift arm assembly and the axis of pivot of the bucket about the axle 75 is approximately 2.5m. Hence the vehicle has a total lift of approximately 3m and over the whole of this range of lift the pivotal connection 75 to the bucket lies forwardly of the front end 12 of the vehicle.

### Propulsion and Loader Controls

The transmission 21 comprises a pair of conventional swash plate hydrostatic pumps 90, 91 the output of which is sent, in conventional manner, to a conventional hydrostatic motor 92. In this example the rearmost pump 90 provides a feed to the motor 92 on the left-hand side of the vehicle whilst pump 91 provides feed to the corresponding pump, not shown, on the right-hand side of the vehicle.

The pumps 90, 91 each have an input member 93, 94 respectively which are rotatable about spaced parallel axes which extend perpendicular to a fore and aft axis of the vehicle and which lie in a substantially horizontal plane.

The input members 93, 94, in the present example, control the angle of the swash plates of their associated hydraulic pump through the intermediary of a hydraulic servo mechanism in-built into the hydraulic pump in conventional manner. If desired, however, the input members 93, 94 may directly mechanically actuate the angle of the swash plates again in conventional manner.

The vehicle is provided with a suitable linkage to connect the manually operable propulsion control means 24 to the input members 93, 94 in order to achieve a desired regime of swash plate angle control.

### Motor and Stub Axle Mounting

The side members 18, 19 each comprise a loop case compartment and as best shown in Figure 4 each comprise a transversely inner wall 160 and a transversely outer wall 161 which are joined by top and bottom walls 162, 163 and end walls 164, which provide an oil tight compartment.

It will be seen that the outer walls 161 provide main chassis members of the vehicle body and that at the rear of the vehicle extensions of the outer walls provide the inner side plate of the upstanding members 26, 27. In addition, a transversely extending member 165 interconnects the main chassis members 161 together and provides a floor to the body.

The loop case compartments 18, 19 have mounted thereon, at the positions shown in Figure 2, the ground engageable propulsion wheels 15, 16 and the motors 92.

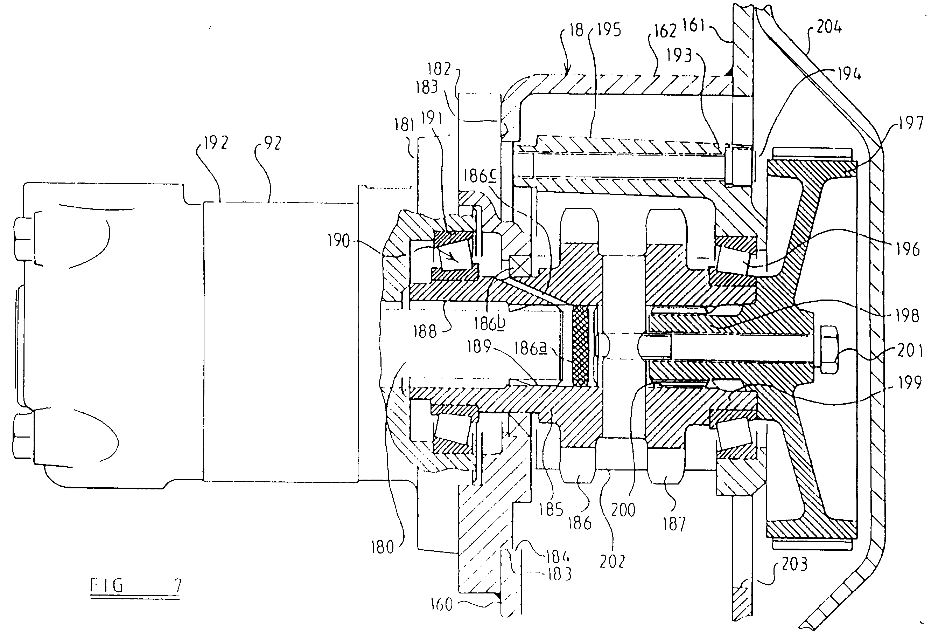

Referring now particularly to Figure 6, there is illustrated the mounting of one of the ground propulsion wheels 16 on the loop case compartment 18 although it should be appreciated that each of the four wheels is mounted on its associated loop case compartment m exactly the same manner and do not require separate description.

At the location of the wheel 16 the outer wall 161 is provided with a circular opening 166 which provides a first guide means which co-operates with a second guide means provided by a rebate 167 of a carrier member 168 of generally frusto-conical configuration and formed integrally with a stub axle housing member 169. The stub axle housing member 169 carries taper roller bearings 170 so that a stub axle 171 is housed by the member 169 so as to be rotatable about an axis of rotation 172.

The wheel 16 is bolted to one end of the stub axle 171 in conventional manner by bolts 173 whilst a driven wheel in the form of a sprocket 174 is bolted to the other end of the stub axle 171 by bolts 175.

The stub axle and its housing, together with the carrier member 168 are configured so that the sprocket 174 is disposed within the loop case compartment 18. The teeth of the sprocket 174 are offset from a central mounting part of the sprocket so that the sprocket can be fastened to the stub axle 171 in a reverse orientation, shown in dotted line in Figure 6, when attached to the stub axle for the other wheel on the same side of the vehicle.

The carrier member 168 is formed so that the axis of rotation 172 of the stub axle 171 is eccentrically disposed relative to the central axis of the rebate 167 and hence relative to a reference axis 176 about which the carrier member 168 is constrained to rotate by co-operation between the hereinbefore mentioned guide surfaces 166, 167.

Clamping means, such as an annular ring 177, are provided to enable the carrier member 168 to be clamped to the outer wall 161 in any desired angular orientation around the reference axis 176.

By the above described eccentric disposition of the axis 172 relative to the axis 176, the position of the axis 172 both longitudinally and vertically of the vehicle can be adjusted thereby permitting of adjustment of the wheel base of the vehicle, in association with driving chains of appropriate lengths, as well as permitting of adjustment of the ground clearance of the vehicle together with providing a facility for tensioning a chain of a given length.

It will be seen that the stub axle 171 is supported solely from the side wall 161 without any support being afforded by the inner wall 160 thereby avoiding the need to effect any machining operations on the wall 160 which would otherwise be necessary if the stub axle were additionally supported thereby.

In addition, a clearance is provided between the sprocket member 174 and the wall 160 to permit of manipulation of a chain through the space and hence into driving relationship with the teeth of the sprocket 174.

Referring now to Figure 7 there is shown the mounting of a motor 92 on the loop case compartment 18.

The motor 92 is a conventional commercially available high torque motor and has a conventional output shaft 180. The motor 92 has a mounting flange 181 by which it is bolted to a mounting plate 182 welded to the inner wall 160 of the compartment 18. The mounting plate 182 has a rebate 183 which is received within a circular aperture 184 formed in the wall 160 to aid location of the ring 182.

A sleeve 185 is machined to provide a pair of driving wheels in the form of sprockets 186, 187 and an inner part 188 of the central passage of the sleeve 185 has the output shaft 180 received therein with a splined connection 189 provided therebetween.

A seal 186a is provided in the central passage and a shaft seal 186b is also provided so that lubricating oil for the splined connection 189 supplied from the motor 92 is caused to flow via bore 186c to lubricate the bearing 190 before returning to the motor.

A taper roller bearing 190 is provided between the external surface of the sleeve 188 and a seat 191 provided by the body 192 of the motor 92.

A bracket member 193 in the form of a three-legged spider is bolted to the pump body 192 by bolts 194, only one leg 195 and one bolt 194 being shown in Figure 7 the other two legs and bolts being equally angularly disposed around the axis of rotation of the output shaft 180A further taper roller bearing 196 is provided between the bracket 193 and an outer surface part of the sleeve 185.

A brake drum 197 is formed with a boss 198 which is received within an outer part 199 of the central passage of the sleeve 185 and is retained in splined engagement therewith, as shown at 200 by a bolt 201. The sleeve is provided with a transversely extending passage 202 to receive a locking pin for the bolt 201.

Chains, such as roller chains, not shown, are looped around the respective sprockets 186, 187 and the respective driven sprockets 174 and the sprocket, not shown, of the other wheel.

To assemble the sprocket and chain drive, initially the chains are manoeuvred into the compartment 18 through an opening 203 provided in the outer wall 161 and are passed between the inner wall 160 of the compartment 18 and the respective driven sprocket such as the sprocket 174. At this stage, although the motor 92 is bolted in position, the sleeve 185 and bracket 195 are absent.

The sleeve 185 is then offered up the outward shaft 180 and the chains are then manoeuvred over the outer end of the sleeve 185 and into position on their associated sprockets 186, 187. The hereinbefore described eccentric mounting of the stub axles permits the stub axle axes 172 to be moved towards the motor 92 to provide sufficient slack in the chain for the above manipulation to occur.

The bracket member 195 is then bolted in position with the chains passing through the spaces between the legs 195 thereof. Thereafter the brake drum 197 is bolted in position and finally an extension housing enclosure member 204 is bolted in fluid tight relationship to the outer wall 161.

In the assembly described with reference to Figure 7 the output shaft 180 and the associated driving sprockets 186, 187 and brake drum 197 are supported entirely from the motor through the bracket 195 and receive no support from any component which is independent of the motor and in particular do not receive any support from the outer member 161. It is therefore unnecessary to perform any machining operation on the member 161 other than the simple formation of the clearance opening 203 which may be made, for example, by flame cutting.

If desired, the motor described above may be mounted on the outer wall 161 instead of the inner wall.

Instead of driving the stub axles from a shaft motor through loops, if desired, the stub axles may be driven by other means such as, by providing a separate motor which may drive each stub axle directly. In this case, if desired the above described eccentric mounting may also be provided with the motor similarly moving eccentrically with the stub axle.

### Operator's Compartment

The operator's compartment 22 is defined in part by the inner plates 26a, 27a of the upstanding members 26, 27, the roof 28 and the posts 29 which together provide the enclosure with one side, 31 and a top and rear wall which include means for preventing access therethrough. In the case of the one side 31 this is by virtue of the presence of the boom assembly and also the wire mesh protective screen 30. At the rear, the operator's compartment is defined in part by the front wall 34b of the engine compartment 34. The space between the top wall 34b and the underside of the pivot member 42 whilst preventing access to the operator's compartment does permit the operator to look out of the compartment to the rear beneath the pivot member 42.

The inner plates 26a, 27a which in substance define part of the operator's compartment are themselves integral continuations of the outer walls 161 of the hereinbefore described side members 18, 19. In the present example the inner plates 26a, 27a, and a contoured base 28a are made by bending a single plate to the profile shown in Figure 4. The roof 28 is welded to the plates 26a, 27a. If desired the operator's compartment may be integrated with other structural members of the body by welding instead of being formed from a single plate.

Thus it will be seen that the main structural parts of the operators compartment which provide the wall thereof are formed integrally with other structural elements of the vehicle and in particular the side members 18, 19 which provide the loop cases and the upstanding members 26, 27 which carry the boom assembly pivots and thus the operator's compartment is integrated with the remainder of the machine and hence has a high ability to withstand forces exerted thereon during roll-over conditions.

## Claims

1. A loader vehicle (10) comprising, a body (11) having a front end (12) and a rear end (13) and provided with ground engageable propulsion means (14), an operator's compartment (22) provided at a fixed location on the body (11), and a boom assembly (40) which is pivotally mounted, at an inner end (43) thereof, on the body (11), adjacent the rear end (13) thereof, for movement between a raised position and a lowered position in which the boom assembly (40) extends forwardly alongside the operator's compartment (22) and a material handling implement (48) carried on an outer end (47) of the boom assembly (40) is disposed forward of the front end (12) of the body (11)
characterized in that
(i) the boom assembly (40) comprises a generally "L" shaped member having limbs which extend mutually transversely,
(ii) one limb of the L-shaped member comprising a single lift arm assembly (41) which extends forwardly along one side only of the operator's compartment (22) and
(iii) the other limb of the L-shaped member comprising a pivot member (42) which is rigid with the lift arm assembly (41),
(iv) the pivot member (42) projecting from the inner end (43) of the lift arm assembly on one side thereof and extending transversely across the body (11) from one side of the lift arm assembly (41) to a position adjacent the opposite side of the body (11),
(v) the pivot member (42) being pivotally mounted on the body (11) by pivotal mounting means (44,45) which are spaced apart transversely of the body (11)
(vi) and are adjacent an upper rear end part of the body (11) on opposite sides of the body (11).

2. A vehicle according to claim 1 wherein an access opening (33) to the operator's compartment (22) is on the other side of the operator's compartment to that alongside which the lift arm assembly (41) extends.

3. A vehicle according to claim 1 or claim 2 wherein the lift arm assembly (41) has an implement carrying member (46) which projects from the outer end (47) of the lift arm assembly (41) and extends transversely of the body (11) and has said material handling implement carried thereon.

4. A vehicle according to claim 3 wherein the body (11) is provided with an abutment means (76) to support the implement carrying member (46) against displacement in a direction rearwardly of the vehicle when the boom assembly is in a lower position.

5. A vehicle according to claim 4 wherein said abutment means (76) is adapted to engage a roller (79) rotatably mounted on the implement carrying member (46), the abutment means comprises an abutment surface (76) provided at the front end of the vehicle and disposed on the opposite side of the vehicle to the side on which the lifting arm assembly (41) is disposed and wherein said abutment surface has a lower, generally upright part (81) and an upper part (82) which extends forwardly and upwardly.

6. A vehicle according to any one of the preceding claims wherein the lift arm assembly (41) comprises a major rectilinearly extending part (55) which extends from the inner end (43) towards the outer end (47) and a minor part (56) which is inclined downwards relative to the major part and is disposed between the major part and said implement carrying member (46).

7. A vehicle according to any one of the preceding claims wherein the ground engageable propulsion means (14) comprises a pair of wheel assemblies (15, 16) disposed on opposite sides of the vehicle and each pair comprising a front wheel (15) disposed forwardly of a rear wheel (16) and means to permit the vehicle to be propelled and steered by driving the wheels (15, 16) on one side of the vehicle at the same or a different speed and/or in a different direction of rotation from those on the other side of the vehicle.

8. A vehicle according to any one of the preceding claims wherein the body (11) comprises a pair of transversely spaced side members (18, 19) on which said ground engageable propulsion means (14) are mounted.

9. A vehicle according to claim 8 wherein a lower portion of the operator's compartment (22) is disposed between said side members (18, 19).

10. A vehicle according to claim 8 or claim 9 wherein the body has a transmission compartment (20) at least a portion of which is disposed between said side members (18, 19) and below the operator's compartment (22) and said transmission compartment (20) housing a transmission to transmit drive from an engine (35) of the vehicle to the ground engageable propulsion means (14).

11. A vehicle according to claim 10 wherein the body (11) is provided with an engine compartment (34) rearwardly of the operator's compartment (22) and transmission compartment (20) and said engine compartment (34) housing the engine (35) of the vehicle.

12. A vehicle according to any one of claims 8 to 11 wherein the mounting means (44, 45) are supported by a pair of transversely spaced upstanding members (26, 27) disposed adjacent the rear of the body and which extend upwardly from said side members (18, 19) at the rear, and on opposite sides of, the operator's compartment (22).

13. A vehicle according to claim 12 wherein the mounting means (44, 45) is disposed on or adjacent a top rear part of the operator's compartment (22) at a level whereby an operator can see horizontally rearwardly beneath the pivot member (42).

14. A vehicle according to claim 12 or claim 13 wherein the side members (18, 19) comprise loop case compartments comprising a transversely inner wall (160) and a transversely outer wall (161) joined by top and bottom walls (162, 163) and end walls (164) and a member, providing one of said walls, being integral with the member which provides at least part of an upstanding member (26, 27).

15. A vehicle according to claim 14 wherein a lower portion of the operator's compartment (22) is disposed between said side members (18, 19), a part of said upstanding members (26, 27) provide a part of side walls (31, 32) of the operator's compartment (22) and a part of the side members (18, 19) and of the upstanding members (26, 27) are formed integrally with each other and with a top wall (28) of the operator's compartment (22).

16. A vehicle according to any one of the preceding claims wherein the operator's compartment (22) comprises an enclosure having one side wall (31), a top wall (28) and a rear wall and another side wall (32) having an access opening (33) and a front wall through which an operator may see, at least part of said walls being integral with other structural elements of the vehicle.

## Patentansprüche

1. Laderfahrzeug (10), umfassend eine Karosserie (11), die eine Vorder- (12) und eine Hinterseite (13) sowie mit dem Boden zusammenwirkende Antriebsmittel (14) aufweist, eine Bedienungskabine (22), die an einem festen Platz an der Karosserie (11) vorgesehen ist, und eine Auslegerbaugruppe (40), die an ihrem inneren Ende (43) an der Karosserie (11) an einer an deren Hinterseite (13) angrenzenden Stelle schwenkbar angebracht ist, um eine Bewegung zu erlauben zwischen einer angehobenen Stellung und einer gesenkten Stellung, in welcher sich die Auslegerbaugruppe (40) neben der Bedienungskabine (22) nach vorne erstreckt und ein Materialbearbeitungsgerät (48), das an einem äußeren Ende (47) der Auslegerbaugruppe (40) getragen wird, vor der Vorderseite (12) der Karosserie (11) angeordnet ist,
dadurch gekennzeichnet, daß
(i) die Auslegerbaugruppe (40) ein im wesentlichen "L"-förmiges Bauteil enthält, das quer zueinander verlaufende Schenkel aufweist,
(ii) wobei ein Schenkel des L-förmigen Bauteils einen einzelnen Hebearmaufbau (41) umfaßt, der sich lediglich entlang einer Seite der Bedienungskabine (22) nach vorne erstreckt, und
(iii) der andere Schenkel des L-förmigen Bauteils ein Drehzapfenbauteil (42) umfaßt, welches starr mit dem Hebearmaufbau (41) verbunden ist,
(iv) wobei das Drehzapfenbauteil (42) vom inneren Ende (43) auf einer Seite des Hebearmaufbaus hervorsteht und sich entlang der Karosserie (11) von einer Seite des Hebearmaufbaus (41) bis zu einer Position, die an die gegenüberliegende Seite der Karosserie (11) angrenzt, quer erstreckt,
(v) wobei das Drehzapfenbauteil (42) an der Karosserie (11) mittels Zapfenbefestigungsmitteln (44, 45) drehbar befestigt ist, welche mit Abstand zueinander quer zur Karosserie (11) angeordnet sind, und die
(vi) angrenzend an einen oberen hinteren Endabschnitt der Karosserie (11) an gegenüberliegenden Teilen der Karosserie (11) liegen.

2. Fahrzeug nach Anspruch 1, bei dem eine Zugangsöffnung (33) zur Bedienungskabine (22) auf der anderen Seite der Bedienungskabine vorgesehen ist, gegenüber der einen, entlang welcher sich der Hebearmaufbau (41) erstreckt.

3. Fahrzeug nach Anspruch 1 oder 2, bei dem der Hebearmaufbau (41) ein Trageglied (46) für Geräte aufweist, das an dem äußeren Ende (47) des Hebearmaufbaus (41) hervorsteht, sich quer zur Karosserie (11) erstreckt und das Materialbearbeitungsgerät trägt.

4. Fahrzeug nach Anspruch 3, bei dem an der Karosserie (11) ein Widerlagermittel (76) vorgesehen ist, um das Trageglied (46) für Geräte gegen eine Verschiebung in einer zur Hinterseite des Fahrzeugs weisenden Richtung zu stützen, wenn sich die Auslegerbaugruppe in einer gesenkten Position befindet.

5. Fahrzeug nach Anspruch 4, bei dem das Widerlagermittel (76) zum Eingriff in eine Rolle (79), die an dem Trageglied (46) für Geräte drehbar befestigt ist, angepaßt ist, wobei das Widerlagermittel an der Vorderseite des Fahrzeugs eine Widerlagerfläche (76) aufweist, die an der gegenüberliegenden Seite des Fahrzeugs bezüglich der Seite, an welcher sich der Hebearmaufbau (41) befindet, angeordnet ist, wobei die Widerlagerfläche einen unteren, im wesentlichen aufrechten Teil (81) und einen oberen Teil (82), welcher sich nach vorne und nach oben erstreckt, aufweist.

6. Fahrzeug nach einem oder mehreren der vorhergehenden Ansprüche, bei dem der Hebearmaufbau (41) einen größeren, sich geradlinig erstreckenden Teil (55), der sich vom inneren Ende (43) zum äußeren Ende (47) erstreckt, und einen kleineren Teil (56), der bezüglich des größeren Teils nach unten geneigt ist und zwischen dem größeren Teil und dem Trageglied (46) für Geräte angeordnet ist, aufweist.

7. Fahrzeug nach einem oder mehreren der vorhergehenden Ansprüche, bei dem die mit dem Boden zusammenwirkenden Antriebsmittel (40) Räderbaugruppenpaare (15, 16) enthalten, die an gegenüberliegenden Seiten des Fahrzeugs angeordnet sind, wobei jedes Paar ein Vorderrad (15), das vor einem Hinterrad (16) angeordnet ist, und Mittel umfaßt, die ermöglichen, daß das Fahrzeug angetrieben und gelenkt wird, indem die Antriebsräder (15, 16) auf einer Fahrzeugseite mit der gleichen oder einer anderen Geschwindigkeit und/oder in einer anderen Drehrichtung als die auf der anderen Fahrzeugseite angetrieben werden.

8. Fahrzeug nach einem oder mehreren der vorhergehenden Ansprüche, bei dem Karosserie (11) ein in Querrichtung mit Abstand zueinander angeordnetes Paar von Seitenteilen (18, 19), an welchen die mit dem Boden zusammenwirkenden Antriebsmittel (14) befestigt sind, aufweist.

9. Fahrzeug nach Anspruch 8, bei dem ein unterer Abschnitt der Bedienungskabine (22) zwischen den Seitenteilen (18, 19) angeordnet ist.

10. Fahrzeug nach Anspruch 8 oder 9, bei dem die Karosserie einen Übertragungsraum (20) aufweist, von dem wenigstens ein Abschnitt zwischen den Seitenteilen (18, 19) und unterhalb der Bedienungskabine (22) angeordnet ist, wobei der Übertragungsraum (20) eine Übertragung aufnimmt, um den Antrieb von einem Motor (35) des Fahrzeugs zu den mit dem Boden zusammenwirkenden Antriebsmitteln (14) zu übertragen.

11. Fahrzeug nach Anspruch 10, bei dem die Karosserie (11) mit einem hinter der Bedienungskabine (22) angeordneten Motorraum (34) ausgestattet ist, wobei der Übertragungsraum (20) und der Motorraum (34) den Motor (35) des Fahrzeugs aufnehmen.

12. Fahrzeug nach einem oder mehreren der Ansprüche 8 bis 11, bei dem Befestigungsmittel (44, 45) von einem in Querrichtung mit Abstand zueinander angeordneten Paar von aufrechten Bauteilen (26, 27) zu halten sind, welche an die Hinterseite der Karosserie angrenzend angeordnet sind und sich von den Seitenteilen (18, 19) an der Hinterseite an gegenüberliegenden Seiten der Bedienungskabine (22) nach oben erstrecken.

13. Fahrzeug nach Anspruch 12, bei dem die Befestigungsmittel (44, 45) an oder neben einem oberen, hinteren Teil der Bedienungskabine (22) in einer Höhe angeordnet sind, so daß ein Fahrzeugbediener unterhalb des Drehzapfenbauteils (42) horizontal nach hinten sehen kann.

14. Fahrzeug nach Anspruch 12 oder 13, bei dem die Seitenteile (18, 19) Schlaufengehäuseräume enthalten, die in Querrichtung eine innere Wand (160) und eine äußere Wand (161) umfassen, welche mit einer oberen und einer unteren Wand (162, 163) sowie einer Begrenzungswand (164) und einem Bauteil verbunden sind, das eine dieser Wände bildet und integral mit dem Bauteil gebildet ist, das wenigstens einen Teil der aufrechten Bauteile (26, 27) bildet.

15. Fahrzeug nach Anspruch 14, bei dem ein unterer Abschnitt der Bedienungskabine (22) zwischen den Seitenteilen (18, 19) angeordnet ist, wobei ein Teil der aufrechten Bauteile (26, 27) einen Teil der Seitenwände (31, 32) der Bedienungskabine (22) bildet, und ein Teil der Seitenteile (18, 19) und der aufrechten Bauteile (26, 27) integral miteinander und mit einer Decke (28) der Bedienungskabine (22) hergestellt sind.

16. Fahrzeug nach einem oder mehreren der vorhergehenden Ansprüche, bei dem die Bedienungskabine (22) ein Gehäuse enthält, das eine Seitenwand (31), eine Decke (28), eine Rückwand sowie eine weitere Seitenwand (32), die eine Zugangsöffnung (33) aufweist, und eine Vorderwand besitzt, durch welche ein Fahrzeugbediener sehen kann, wobei wenigstens ein Teil der Wände integral mit anderen Konstruktionselementen des Fahrzeugs gebildet ist.

## Revendications

1. Véhicule chargeur (10) comprenant un corps (11) avec une extrémité avant (12) et une extrémité arrière (13), muni de moyens de propulsion (14) pouvant être mis en prise sur le sol, d'une cabine d'opérateur (22) placée en un endroit fixe sur le corps (11), et d'un ensemble mât (40) monté à pivot sur le corps, à une extrémité intérieure (43) de celui-ci, tout près de son extrémité arrière (13), pouvant se mouvoir entre une position élevée et une position abaissée dans laquelle l'ensemble mât (40) s'étend vers l'avant le long de la cabine d'opérateur (22), et un outil de manutention de matériaux (48) porté par une extrémité extérieure (47) de l'ensemble mât (40) placé en avant de l'extrémité avant (12) du corps 11, caractérisé en ce que
(i) l'ensemble mât (40) comprend une pièce de forme générale en "L" dont les membres s'étendent transversalement;
(ii) un membre de la pièce en forme de "L" comprenant un ensemble à bras élévateur unique (41) qui s'étend vers l'avant le long d'un seul côté de la cabine d'opérateur (22);
(iii) l'autre membre de la pièce en forme de "L" comprenant une pièce pivotante (42), rigide par rapport à l'ensemble bras élévateur (41);
(iv) la pièce pivotante (42) se projetant à partir de l'extrémité intérieure (43) de l'ensemble bras élévateur sur un côté de celui-ci et s'étendant transversalement par rapport au corps (11), à partir d'un côté de l'ensemble bras élévateur (41) jusqu'à une position adjacente au côté opposé du corps (11);
(v) la pièce pivotante (42) étant montée à pivot sur le corps (11) par des moyens de montage pivotants (44, 45) qui sont espacés transversalement du corps (11);
(vi) et sont adjacents à une extrémité arrière haute du corps (11) sur les côtés opposés du corps (11).

2. Véhicule selon la revendication 1, dans lequel une ouverture d'accès (33) à la cabine d'opérateur (22) est située du côté de la cabine d'opérateur opposé à celui le long duquel se trouve l'ensemble bras élévateur (41).

3. Véhicule selon la revendication 1 ou la revendication 2, dans lequel l'ensemble bras élévateur (41) possède une pièce porte-outil (46) qui se projette à partir de l'extrémité extérieure (47) de l'ensemble bras élévateur (41), s'étend transversalement par rapport au corps (11) et porte ledit outil de manutention de matériaux.

4. Véhicule selon la revendication 3, dans lequel le corps (11) est muni de moyens de butée (76) pour maintenir la pièce porte-outil (46) et l'empêcher de se déplacer vers l'arrière du véhicule lorsque l'ensemble mât est en position abaissée.

5. Véhicule selon la revendication 4, dans lequel les moyens de butée (76) sont conçus pour se mettre en prise sur un rouleau (79), monté de façon à tourner sur la pièce porte-outil (46), les moyens de butée comprenant une surface de butée (76) prévue à l'extrémité avant du véhicule et placée du côté opposé du véhicule par rapport au côté sur lequel l'ensemble bras élévateur (41) est placé, et dans lequel ladite surface de butée possède une pièce inférieure, généralement verticale (81), et une pièce supérieure (81) dirigée vers l'avant et vers le haut.

6. Véhicule selon l'une quelconque des revendications précédentes, dans lequel l'ensemble bras élévateur (41) comprend une pièce principale linéaire extensible (55) qui va de l'extrémité intérieure (43) à l'extrémité extérieure (47), et une pièce secondaire (56) qui est inclinée vers le bas par rapport à la pièce principale et est placée entre la pièce principale et ladite pièce porte-outil (46).

7. Véhicule selon l'une quelconque des revendications précédentes, dans lequel les moyens de propulsion (14) pouvant être mis en prise sur le sol comprennent une paire d'ensemble de roues (15, 16) placées sur les côtés opposés du véhicule, chaque paire comprenant une roue avant (15) disposée en avant d'une roue arrière (16) et des moyens pour permettre la propulsion du véhicule et sa direction par l'entraînement des roues (15, 16) d'un côté du véhicule, à la même vitesse ou à des vitesses différentes et/ou dans une direction différente de rotation par rapport à celles de l'autre côté du véhicule.

8. Véhicule selon l'une quelconque des revendications précédentes, dans lequel le corps (11) comprend une paire de pièces latérales espacées transversalement (18, 19), sur lesquelles sont montés les moyens de propulsion (14) pouvant être mis en prise sur le sol.

9. Véhicule selon la revendication 8, dans lequel une partie inférieure de la cabine d'opérateur (22) est placée entre lesdites pièces latérales (18, 19).

10. Véhicule selon la revendication 8 ou la revendication 9, dans lequel le corps possède un compartiment de transmission (20), dont au moins une partie est placée entre lesdites pièces latérales (18, 19) et au-dessous de la cabine d'opérateur (22), et où ledit compartiment de transmission (20) contient une transmission pour transmettre l'entraînement par un moteur (35) du véhicule aux moyens de propulsion (14) pouvant être mis en prise sur le sol.

11. Véhicule selon la revendication 10, dans lequel le corps (11) est muni d'un compartiment (34) de moteur à l'arrière de la cabine d'opérateur (22) et d'un compartiment (20) de transmission, et où ledit compartiment de moteur (34) contient le moteur (35) du véhicule.

12. Véhicule selon l'une quelconque des revendications 8 à 11, dans lequel les moyens de montage (44, 45) sont supportés par une paire de pièces verticales espacées transversalement (26, 27), placées tout près de l'arrière du corps, et qui s'étendent vers le haut à partir desdites pièces latérales (18, 19), à l'arrière et sur les côtés opposés de la cabine d'opérateur (22).

13. Véhicule selon la revendication 12, dans lequel les moyens de montage (44, 45) sont placés sur une partie supérieure arrière de la cabine d'opérateur (22) ou tout près d'elle, à un niveau qui permette à l'opérateur de voir horizontalement vers l'arrière, au-dessous de la pièce pivotante (42).

14. Véhicule selon la revendication 12 ou la revendication 13, dans lequel les pièces latérales (18, 19) comprennent des compartiments de boîtiers de boucle comprenant une cloison intérieure transversale (160) et une cloison extérieure transversale (161) réunies par des cloisons supérieure et inférieure (162, 163) et des cloisons d'extrémité (164) et dans lequel une pièce, fournissant l'une desdites cloisons, forme un tout avec la pièce qui fournit au moins une partie d'une pièce verticale (26, 27).

15. Véhicule selon la revendication 14, dans lequel une partie inférieure de la cabine d'opérateur (22) est placée entre lesdites pièces latérales (18, 19), et où une partie des pièces verticales (26, 27) fournissent une partie des cloisons latérales (31, 32) de la cabine d'opérateur (22), et dans lequel une partie des pièces latérales (18, 19) et des pièces verticales (26, 27) forment un tout l'une avec l'autre et avec une cloison supérieure (28) de la cabine d'opérateur (22).

16. Véhicule selon l'une quelconque des revendications précédentes, dans lequel la cabine d'opérateur (22) comprend une enceinte possédant une cloison latérale (31), et une cloison supérieure (28), une cloison arrière et une autre cloison latérale (32), qui sont munies d'une ouverture d'accès (33), et une cloison avant à travers lesquelles un opérateur peut voir, une partie au moins desdites cloisons formant un tout avec d'autres éléments de la structure du véhicule.
